# DEMANDE DE BREVET EUROPEEN

(11) **EP 2 963 809 A1**
(43) Date de publication de la demande: **06.01.2016**
(21) Numéro de dépôt: 14175879.7
(22) Date de dépôt: 04.07.2014
(51) Int. Cl.: H02S 40/42, H02S 40/44

(54) **Panneau solaire hybride**

(71) Demandeur: Nuti, Pascal, 13590 Meyreuil (FR)
(72) Inventeur: Nuti, Pascal, 13590 Meyreuil (FR)
(74) Mandataire: Vigand, Philippe

(57) **Abrégé**

L'invention concerne un panneau solaire hybride, capable de transformer la lumière du soleil en électricité, et en même temps de récupérer le rayonnement non converti pour chauffer un liquide passant entre les cellules photovoltaïques et une plaque isolante servant aussi d'étanchéité, sans pression, en utilisant la gravité et la tension superficielle du liquide.

Elle permet de résoudre plusieurs problèmes dans ce domaine du panneau PV hybride, en particulier le coût de fabrication.

## Description

### Domaine technique de l'invention

L'invention à pour objet un panneau solaire hybride. L'invention concerne également un procédé pour refroidir les éléments photovoltaïques d'un panneau solaire hybride, ainsi qu'un procédé de fabrication d'un tel panneau solaire.

Elle concerne le domaine technique des échangeurs thermique pour le contrôle thermique de panneaux de panneaux solaires hybrides (capable de produire une énergie électrique et une énergie thermique), les dits échangeurs comprenant des moyens de circulation du fluide de refroidissement.

### État de la technique

Les panneaux électriques photovoltaïques permettent de produire une énergie électrique à partir du rayonnement solaire. Ils comprennent une pluralité d'éléments photovoltaïques qui fonctionnent suivant le principe de l'effet photoélectrique. Généralement, plusieurs éléments sont reliés entre eux sur un panneau photovoltaïque, et plusieurs panneaux sont regroupés ensemble pour créer une installation solaire. Cette installation produit de l'électricité qui peut être consommée sur place ou alimenter un réseau de distribution.

Les panneaux solaires photovoltaïques ne convertissent qu'une faible part du rayonnement solaire (aujourd'hui en dessous de 20%), le reste étant de la chaleur non utilisée. Cette chaleur est défavorable à la performance électrique des panneaux solaires, puisqu'on peut constater une diminution de l'efficacité de l'ordre de 0,5% par °C. C'est pourquoi il est doublement intéressant de refroidir les panneaux solaires photovoltaïques. En effet, non seulement l'efficacité des éléments photovoltaïques, mais les calories du refroidissement peuvent être utilisées dans des systèmes de chauffage plus ou moins complexe. On parle alors de panneaux solaires hybrides capables de produire une énergie électrique et une énergie thermique.

Généralement, un échangeur thermique est disposé en vis à vis de la face arrière des éléments photovoltaïques de façon à refroidir ces derniers. Les documents de brevets suivants décrivent un certain nombre d'échangeurs thermiques pour panneaux solaires : FR 2.319.585 (LIEBARD) ; FR 2.566.183 (LUCCIONI) ; FR 2.727.790 (CYTHELIA) ; US 4.361.717 (GILMORE) ; US 4.184.543 (KLEINE) ; US 7.076.965 (LASICH) ; DE 197.47.325 (SCHRENK) ; DE 10.2004.002.900 (MASCHKE) ou encore FR 2.967.817-A1 (BROTTIER / MOUTERDE).

Tous ces échangeurs permettent de refroidir les éléments photovoltaïques afin d'augmenter leur rendement. Toutefois, ils présentent un certain nombre d'inconvénients : leur conception peut être relativement complexe et alourdissent les panneaux, ils permettent rarement de refroidir de manière uniforme les éléments photovoltaïques, les calories ne sont pas extraites de manière optimisée, il est nécessaire d'utiliser beaucoup d'énergie pour déplacer le fluide réfrigérant.

De plus, ils comportent beaucoup de parties, souvent métalliques, qui contribuent à augmenter leur coût de fabrication, sa complexité, et fonctionnent sous pression, de l'ordre de 2 à 3 bars, Cette dernière caractéristique, associée à une montée en température nécessaire des matériaux pour accomplir leur fonction, augmente encre les difficultés de fabrication, et réduit d'autant la durée de bon fonctionnement du produit complet, sauf à adopter des métaux coûteux, comme par exemple l'acier inoxydable ou le cuivre.

Ces systèmes utilisent des solutions pour perturber l'écoulement, rendant ainsi les échanges thermiques plus efficaces, mais au détriment des pertes de charges, ajoutant ainsi une surconsommation des pompes de circulation, diminuant d'autant le rendement global de l'opération hybride.

Face à cet état de choses, le principal objectif de l'invention est de simplifier la conception des échangeurs pour panneaux solaires hybrides, de façon qu'ils puissent être fabriqués de manière industrielle, plus rapidement, et à moindre coûts.

Parmi les autres objectifs à atteindre par l'invention on peut citer : une extraction optimisée des calories, une circulation de liquide de refroidissement très économe en énergie, un poids réduit au niveau de l'échangeur et une quantité d'eau dans l'échangeur minimale, contribuant ainsi à ne pas solliciter exagérément la structure du panneau photovoltaïque, et à procurer ainsi une durée de vie allongée.

### Divulgation de l'invention

A cet effet, un des buts de l'invention est de proposer un panneau solaire hybride comprenant :
- des éléments photovoltaïques comportant une face avant et une face arrière,
- une plaque arrière disposée en vis à vis de la face arrière desdits éléments photovoltaïques,
ladite plaque comportant une zone de distribution de gouttes de liquide de refroidissement, et une zone de collecte de ces gouttes,
et se caractérisant par le fait que :
- les gouttes de liquide de refroidissement sont simplement isolées de l'air extérieur par la présence de ladite plaque arrière
- la distribution des gouttes du liquide de refroidissement se fait directement sur la face arrière des éléments photovoltaïques (ou au moins une partie de ladite face arrière), de sorte à ce qu'elles glissent sur ladite face arrière (ou au moins une partie de ladite face arrière) des éléments photovoltaïques, les gouttes de liquide de refroidissement descendent par gravité, protégées et isolées thermiquement par la plaque arrière vers la zone de collecte,
le tout transformant le dos des éléments photovoltaïques en zone d'échange thermique. Le panneau hybride selon la présente invention comprend une zone de distribution de gouttes de liquide de refroidissement sur au moins une partie de la face arrière des cellules photovoltaïques, ce qui réduit considérablement le poids total de l'installation, car il n'y a pas besoin de baigner la face arrière avec un lit de liquide. De plus, avec le matériau plastique qui recouvre la face arrière des éléments photovoltaïques, l'écoulement des gouttes d'eau est aléatoire, ce qui permet de refroidir l'ensemble, ou la majeure partie, de la face arrière. On comprend que les gouttes de liquide de refroidissement sont projetées sur une partie ou une bande de la face arrière (en haut, ou au moins à 90% de la hauteur de la dite face arrière), pour qu'il y ait un écoulement aléatoire de ces gouttes sur la majeure partie de la face arrière pour la refroidir (c'est-à-dire sur au moins 80%, et plus préférentiellement sur au moins 90%).

La solution proposée par l'invention est un panneau solaire hybride comprenant :
- Des éléments photovoltaïques comportant une face avant et une face arrière.
- Une zone dite de distribution qui consiste à créer une pluralité de canaux de circulation de gouttes de liquide de refroidissement turbulentes.
- Une zone dite d'échange ou les gouttes de liquide de refroidissement turbulentes récupèrent la thermie au dos des éléments photovoltaïques.
- Une zone de collecte ou le liquide de refroidissement est collecté par la seule force de gravité.

Ce panneau est remarquable en ce que la plaque intérieure regroupe les zones de distribution, d'échange et de collecte, et fait aussi office d'isolation.

Préférentiellement, la dite plaque arrière est une pièce monobloc non métallique, et grâce à la pluralité de gouttes d'eau qui ont une trajectoire aléatoire et/ou sont turbulentes, ne nécessite aucun élément dit « de perturbation ». La circulation du fluide se fait à pression atmosphérique, ne nécessitant aucune technique d'assemblage coûteuse, ni le moindre gramme de métal.

On peut envisager de recouvrir la face arrière des éléments photovoltaïques par un revêtement hydrophobe sur lequel glissent alors les gouttes de liquide de refroidissement, de sorte à forcer les gouttes de liquide de refroidissement à avoir une trajectoire perturbée, pour couvrir au cours de l'écoulement l'ensemble de la face arrière des éléments photovoltaïques.

Cette plaque inférieure peut constituer non seulement la zone de distribution / échange / collecte, mais aussi tout ou partie du support isolant du panneau photovoltaïque, ce qui lui permet entre autre de constituer une toiture isolée, voire un capot supérieur de réservoir de stockage d'eau chaude.

La plaque inférieure comprend préférentiellement une zone supérieure de diffusion, qui crée la pluralité de goutte d'eau avec une trajectoire aléatoire ou qui sont en écoulement turbulent, et possède l'originalité que les gouttes d'eau sont déposées directement sur la face arrière des cellules photovoltaïques, plus exactement sur le film de laminage plastique fin qui les protège (ex : Dupont Tedlar). Par ce fait, elles vont accélérer et tourner sur elles mêmes en chutant, suivant la force de gravité, transformant ainsi la face arrière des éléments photovoltaïques en échangeur thermique. A cet endroit, la plaque inférieure ne supporte aucune pression, et ne sert plus qu'a isoler la zone d'échange de l'air extérieur, voire à guider quelques gouttes qui n'auraient pas « collé » au dos des éléments photovoltaïques vers la zone de collecte. Ainsi, la plaque inférieure peut donc se retrouver simplement « pressée » contre le dos du panneau, un simple joint pouvant occulter les sorties de gouttes d'eau en dehors de la zone d'échange ou de collecte.

Pour optimiser l'échange thermique, la distance entre l'arrière des cellules photovoltaïque et la plaque d'échange est toujours inférieure ou égale à la taille de la goutte générée par la zone de distribution, forçant ainsi une goutte n'ayant pas « collé » au dos des éléments photovoltaïques à échanger sa thermie par conduction, ce avant d'arriver dans la zone de collecte.

La face arrière de la plaque arrière est naturellement dépourvue de système d'isolation, on fera simplement varier sa matière et son épaisseur pour s'adapter aux diverses zones de la planète. Éventuellement, un film de protection ultraviolet, ou une peinture sera utile si le matériau ne résiste pas naturellement aux rayonnements ultraviolets (cas du polystyrène, par exemple).

On choisira préférentiellement un thermoplastique / plastique / composite de qualité alimentaire pour fabriquer la plaque arrière, afin d'éviter un double échangeur dans l'installation solaire, augmentant d'autant les performances thermiques. La disposition du système fait que la plaque arrière ne contient pas de liquide si il n'y à pas d'échange, il n'existe donc aucun risque de gel, le système se vidange seul, par gravité.

Préférentiellement, le boîtier de jonction électrique au dos du panneau photovoltaïque sera de taille minimale, de façon à ne pas perturber la zone d'échange, et situé dans une zone optimisée du panneau ou il provoquera le minimum de gène, autant pour la facilité de câblage que pour la qualité des échanges thermiques.

On utilisera une pompe pour apporter le liquide dans la zone d'échange, mais sa puissance sera limitée à la hauteur de relevage de l'eau, le processus entier se déroulant ensuite par gravité. Par exemple, pour un panneau dont l'entrée se trouve 2m plus haut que le stockage, environ 2-3w suffiront à relever l'eau, car la pression requise n'est que de 0,2 bars, et le pompage n'est pas forcement permanent : on pourra créer des cycles liés au delta T requis, balançant ainsi la demande électrique ou thermique du panneau en fonction de la saison et des besoins en électricité / eau chaude.

Ainsi, pour optimiser le refroidissement des cellules photovoltaïques en saison chaude, on pourra refroidir l'eau chaude du stockage en activant des cycles diurnes, permettant ainsi le lendemain une pleine journée de circulation d'eau sans surchauffe du stockage. Cette fonction, grâce à notre échange très économique en énergie, pourra être sélectionnée sans risque de bilan énergétique combiné médiocre.

Selon un mode de réalisation, la plaque arrière inclut un réseau hydraulique agencé pour mettre en circulation le liquide de refroidissement, et/ou présente des dimensions correspondant aux dimensions de l'ensemble des éléments photovoltaïques, de sorte à pouvoir se bloquer sur le panneau et se connecter à un système global de circulation de liquide de refroidissement. Selon cette mise en oeuvre, l'invention est particulièrement bien adaptée pour les panneaux photovoltaïques ayant un profilé périphérique en U ce qui permet l'insertion d'un élément comprimant entre l'aluminium et le Tedlar. Il est possible d'utiliser une plaque thermoformée, injectée, moulée ou équivalent, ayant une géométrie particulière. Cette plaque possède un certain jeu par rapport au cadre du panneau. Il est de plus possible de jouer sur la flexibilité de cette plaque pour la rentrer environ sur la moitié de la largeur du profilé. Son maintien en position est assuré par une mousse (ou dispositif équivalent) qui appuie en partie sur la plaque et sur le profilé. Pour tout cadre du panneau photovoltaïque ayant un retour assez large, il est possible d'adapter les dimensions de la plaque en tenant compte de la boite de jonction.

Selon un mode de réalisation, la plaque arrière comprend des raidisseurs, tels que des nervures ou des inserts parallèles aux bords de la plaque arrière, et/ou inclinées par rapport aux bords de la plaque arrière, parallèles aux diagonales, c'est-à-dire en pente ou avec une orientation de 45° par exemple par rapport aux bords de la plaque arrière. La disposition en diagonale des raidisseurs permet d'installer le panneau solaire en orientation portrait ou paysage. On peut envisager d'implanter dans la plaque arrière des plots de reprise d'effort sur les éléments photovoltaïques (sur leur face arrière recouverte de Tedlar par exemple), pour garantir un espacement correct, en particulier à proximité de la distribution des gouttes de liquide de refroidissement.

Avantageusement, au moins un des raidisseurs est une goulotte qui loge un canal de passage du liquide de refroidissement. On combine avantageusement l'aspect de résistance mécanique avec le passage du liquide de refroidissement.

Selon un mode de réalisation, le panneau comprend des moyens d'étanchéité ente la plaque arrière et les éléments photovoltaïques. On peut envisager un joint périphérique entre la plaque arrière et les éléments photovoltaïques. La plaque possède une goulotte permettant d'héberger un joint sur toute sa périphérie. Ce joint sera comprimé par une mousse appuyant à la fois sur la plaque posée sur le Tedlar et le profile en aluminium. Il est possible d'insérer un deuxième niveau de joint autour de la boite de jonction, Il est également possible d'utiliser une colle assurant l'étanchéité, de manière économique.

Avantageusement, la plaque arrière présente une longueur et une largeur, et comprend au moins une zone de distribution sur sa longueur et au moins une zone de distribution sur sa largeur. Cette mise en oeuvre permet de fixer le panneau solaire en portrait ou paysage avec des coûts limités. En effet, la plaque arrière est standardisée, tout en autorisant une disposition du panneau solaire en portrait ou en paysage.

On peut envisager que chaque zone de distribution est formée par une conduit installé dans une zone de réception directement formée par la plaque arrière. La zone de réception peut être une rainure ou une forme complémentaire du conduit, obtenue par exemple lors d'une opération d'usinage, de thermoformage ou moulage de la plaque arrière. Il suffit alors de prévoir dans la plaque arrière une zone de réception dans le sens de la longueur et une autre zone de réception dans le sens de la largeur et ensuite installer le conduit dans la zone de réception la plus appropriée au sens d'installation du panneau solaire.

Il est avantageux d'installer le trou d'évacuation de liquide de refroidissement dans un coin. Dans ce cas, il n'y a qu'un seul trou d'évacuation à prévoir, que le panneau solaire soit installé en portrait ou en paysage. Il suffit que chaque zone de collecte, opposée à une zone de distribution, soit en pente pour amener le liquide de refroidissement vers le trou d'évacuation.

Selon un mode de réalisation, la zone de distribution comprend un conduit de distribution qui s'étend d'une extrémité amont depuis un bord latéral du panneau solaire vers une extrémité aval à un autre bord latéral du panneau solaire, et le conduit est connecté à chaque extrémité à un coude de connexion qui traverse la plaque arrière. On évite ainsi tout recours à un Té au milieu du conduit qui reviendrait à limiter la longueur de conduit de distribution. Avec cette mise en oeuvre, on peut relier plusieurs panneaux solaires hybrides entre eux en série, le dernier panneau ayant son extrémité aval de conduit de distribution bouchée. On utilise de préférence des connecteurs à connexion rapide.

Selon un mode de réalisation, la plaque arrière comprend des moyens de blocage dudit au moins un conduit de distribution, tels qu'une goulotte formée dans la structure de la plaque arrière et agencée pour pincer/bloquer ledit au moins un conduit de distribution, et/ou un connecteur passe-paroi traversant la paroi de la plaque arrière et connecté audit au moins un conduit de distribution. Cette mise en oeuvre permet de bloquer le tuyau d'eau de liquide de refroidissement à l'intérieur du panneau pour que les gouttes de liquide de refroidissement (de l'eau par exemple) soient projetées vers le panneau. Le tuyau est inséré dans un connecteur passe paroi. Ce connecteur est donc bloqué et bloque le tuyau d'un côté, alors que l'autre connecteur bloque le tuyau de l'autre côté. Le tuyau ayant une certaine rigidité, il reste dans le même alignement. La rotation est évitée car le tuyau est enfoncé dans le connecteur. Le tuyau est également inséré en force dans une goulotte qui permet de le fixer suivant tous les axes, ceci évite la rotation pouvant empêcher l'eau de sortir complètement ou pas de manière adéquate. Une solution alternative ou additionnelle est le collage via une colle alimentaire, si de l'eau destinée à un usage domestique est utilisée. Le filet de colle sera applique au fond de la goulotte.

Avantageusement, le panneau solaire comprend au moins un capteur de température sur le montant du panneau, et/ou un débitmètre en entrée d'eau froide, et/ou un capteur de température en entrée d'eau froide, de même pour l'eau récupérée, et/ou un capteur de luminosité, et/ou un capteur de puissance et de tension sur les sorties de cellules afin de suivre et surveiller le fonctionnement du panneau et optimiser au mieux les débits d'eau plusieurs capteurs seront installés. Les informations peuvent être traitées par un module local ou renvoyées vers un module global.

Un autre aspect de l'invention concerne un procédé de fabrication d'un panneau solaire hybride dans lequel un échangeur thermique est disposé sous les éléments photovoltaïques dudit panneau, ledit procède consistant à:
- disposer une plaque de distribution / échange /collecte inférieure sous les dits éléments photovoltaïques, ladite plaque limitant une zone d'échange thermique par le biais de gouttes turbulentes passant directement sur le dos des éléments photovoltaïques,
- créer sur ladite plaque une zone dite de distribution supérieure afin de disposer d'une pluralité de canaux de gouttes turbulentes minimisant ainsi les zones photovoltaïques non couvertes par l'échange thermique direct.

Préférentiellement, on utilise un matériau isolant d'épaisseur variable, non métallique, thermoformé, moulé ou collé.

### Description des figures

D'autres avantages et caractéristiques de l'invention apparaîtront mieux à la lecture de la description d'un mode de réalisation préféré qui va suivre, en référence aux dessins annexés, réalisés à titre d'exemple indicatif, et non limitatif sur lesquels :
- la figure 1 est une vue schématique en coupe d'un panneau solaire hybride conforme à l'invention ;
- la figure 2 représente une vue de face d'une plaque arrière pour un panneau solaire hybride selon l'invention ;
- la figure 3 représente une coupe partielle de la plaque arrière de la figure 2, au niveau d'une zone de distribution.

### Modes de réalisation de l'invention.

Le panneau solaire objet de l'invention est un panneau hybride, c'est à dire qu'il est capable de produire une énergie électrique et une énergie thermique. Il est destiné à être utilisé seul, ou en combinaison avec d'autres panneaux similaires, de façon à ce que l'énergie électrique et thermique qu'elle produit soient exploitables par une habitation ou une installation.

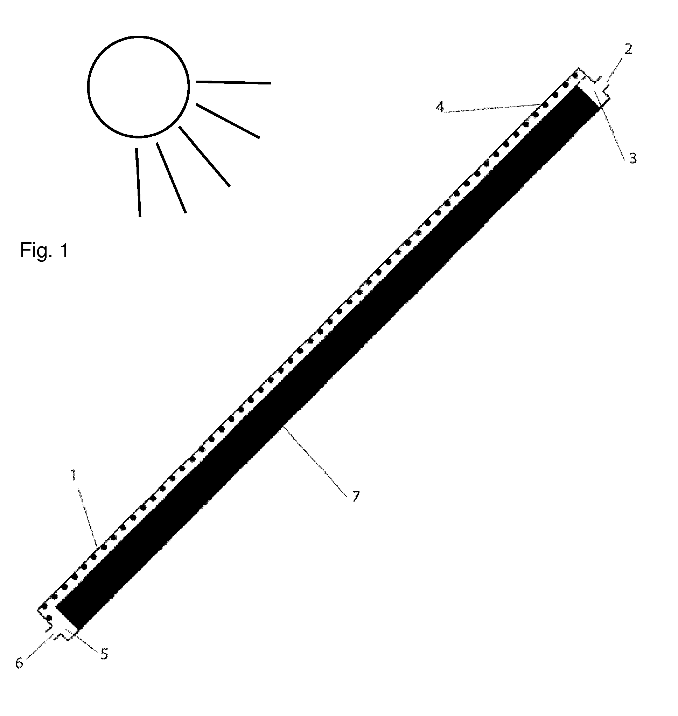

En se rapportant à la figure 1, le panneau solaire intègre des éléments photovoltaïques 1 comportant une face avant et une face arrière, elle même laminée avec un film plastique mince. La face avant est laissée libre, de façon à ce qu'elle puisse recevoir le rayonnement solaire. La face arrière est en vis à vis d'une zone de distribution de gouttes de liquide de refroidissement 3, préférentiellement de l'eau, située en haut du panneau, au dessus de la zone d'échange. Les gouttes de liquide de refroidissement 4 glissent par gravité, restant attachées au dos des éléments photovoltaïques par le principe de la tension superficielle des liquides, jusqu'à la zone de collecte 5.

Le panneau solaire contient plusieurs éléments photovoltaïques connectés en série ou parallèle. Ces derniers peuvent contenir des cellules photovoltaïques, des couches minces photovoltaïques, etc. Les types d'éléments photovoltaïques étant bien connus de l'homme du métier, ils ne seront pas détaillés ici avec plus de précision.

En pratique, la plaque arrière n'a pas besoin d'être fixée au panneau solaire, mais seulement maintenue en place, ou collée (par une colle ou mousse), sans besoin réel d'étanchéité. Seule la zone de collecte 5 se doit d'avoir un lien étanche avec la partie basse du dos des cellules photovoltaïques. De manière préférentielle, cette zone 5 sera simplement incorporée dans le profilé qui sert de cadre au panneau, ou collée au dos des éléments photovoltaïques dans les procédés dit « frameless » (sans cadre ou profilé, technique utilisée sur les toits en intégration au bâti), en utilisant le même méthode que le collage du boîtier de jonction, soit un mastic ou colle adapté.

La zone de distribution 3, qui peut par exemple être un simple tuyau de type « goutte à goutte », ou usinée / moulée dans la plaque arrière 7, n'a pas plus besoin de fixation étanche, la simple projection des gouttes d'eau, voire leur glissement sur le dos des éléments photovoltaïques suffit en combinaison avec la gravité à emmener naturellement les gouttes vers la zone de collecte 5. Dans tous les cas, la plaque arrière 7 est située sous les éléments photovoltaïques 1 de manière à ne pas faire obstacle au rayonnement solaire.

Un fluide de refroidissement, qui est typiquement de l'eau, coule en gouttes le long de la face arrière des éléments photovoltaïques afin de récupérer leurs calories. Pour protéger électriquement les éléments photovoltaïques 1 du fluide de refroidissement, un isolant électrique de type film plastique mince (exemple : Dupont Tedlar épaisseur 50 microns) fait l'interface avec la face arrière des dits éléments. Il n'y à donc pas de contact direct entre les composants électriques des éléments photovoltaïques 1 et le fluide de refroidissement. Cette feuille fait de toute façon partie intégrante du processus de fabrication des panneaux photovoltaïques, elle est laminée à chaud sous les cellules photovoltaïques, constituant la protection électrique, mécanique et anti corrosion. Bien que ce film soit plastique, son coefficient d'isolation est négligeable au vu de sa très faible épaisseur, de l'ordre de 50 microns. La résistance thermique globale est donc faible, mais nous aidera tout de même à ne pas dépasser les températures de fusion du matériau de la plaque arrière, de l'ordre de 95°c, par exemple, pour le polystyrène extrudé haute température (XPS).

Pour l'utilisation selon l'invention, le but est de rester dans des températures inférieures à 60°c, car au dessus le rendement des cellules retombe, et le coefficient d'isolation de la plaque arrière sera dosé en fonction de ce critère et du climat. L'avantage d'utiliser un panneau photovoltaïque comme récepteur d'énergie thermique, c'est qu'au plus la différence de température entre le liquide de refroidissement et la température du dos des cellules photovoltaïques va augmenter, au plus les pertes thermiques vont augmenter (en particulier par conduction et rayonnement côté vitre), rendant le système auto-protégé d'une montée en température destructive.

En pratique, l'ensemble hybride photovoltaïque comprend trois zones principales : une zone de distribution du liquide de refroidissement, une zone d'échange thermique par gouttelettes 4, isolée par la plaque 7, et une zone de collecte dudit fluide 5. Les éléments photovoltaïques 1 sont préférentiellement regroupés au dessus de la zone d'échange 4, mais peuvent aussi être répartis au dessus des zones de distribution 3 et de captage 5. La zone d'échange 4 à par exemple une surface comprise entre 0,3 m² et 5 m².

Comme représenté sur la figure 1, la plaque arrière 7 est monobloc, obtenue par usinage, thermoformage ou moulage d'un matériau non métallique, préférentiellement de qualité alimentaire et insensible à l'action de l'eau dans le temps. Préférentiellement, ladite plaque arrière fera aussi office de zone de distribution, et de zone de collecte, limitant l'investissement industriel à un élément monobloc rapporté sur un panneau photovoltaïque classique, très facile à insérer dans une chaîne de fabrication classique, voire à rajouter sous forme de kit après fabrication.

La distance entre la plaque 7 et le dos des éléments photovoltaïques 1 sera minimale, de l'ordre de 1 à 2 mm maximum, de façon à être toujours inférieure ou égale à la moyenne de la taille des gouttelettes d'eau en circulation turbulente et/ou aléatoire à l'intérieur de la zone d'échange 4. Cette distance sera maintenue par tout moyen physique, par exemple moulée sous forme d'entretoises dans la plaque 7, ou de séparateurs collés sur la plaque 7, en regard du dos des éléments photovoltaïques.

Le nombre de canaux de diffusion de gouttes d'eau sera maximal, avec un espacement compris entre un et trois centimètres, et préférentiellement entre 1.5 et 2.5cm. Ainsi, les éléments photovoltaïques, souvent au format 125x125mm, seront traversés par en moyenne 6 canaux de gouttes de liquide de refroidissement, ce qui leur assure un refroidissement optimal et uniforme, sans point chaud qui diminuerait le rendement global du panneau.

Tout besoin d'élément de perturbation est ainsi éliminé, le seul déplacement des gouttes de liquide de refroidissement, combiné de manière préférentielle à une variation de débit séquentielle de la pompe qui emmène le fluide de refroidissement dans la zone de distribution 3 suffit à rendre le passage des gouttes turbulentes aléatoire, et garantit ainsi la couverture de la totalité de la surface arrière des cellules photovoltaïques 1.

Dans la zone 2 de la figure 1, on schématise l'entrée du fluide, qui sera préférentiellement un raccord rapide, collé ou vissé sur la périphérie supérieure de la zone de distribution 3.

Par analogie, dans la même figure 1, la zone 6 décrit la sortie du fluide de refroidissement, après le captage, qui sera préférentiellement de même facture que le raccord d'arrivée, et sera collé ou vissé, de manière étanche à la périphérie inférieure de la zone de captage.

De manière préférentielle, on utilisera une boite de connexion aux dimensions minimales, de façon à ne pas perturber le bon refroidissement de tous les éléments photovoltaïques. L'homme de l'art fera en ainsi en sorte de ne pas gêner le bon refroidissement des éléments photovoltaïques en le sélectionnant et le localisant de manière optimisée, par exemple dans un coin, ou sous un profilé.

Il est à noter que les zones 2 (entrée de liquide de refroidissement) et 6 (sortie du liquide de refroidissement) sont représentées coplanaires avec le panneau solaire, mais on peut très bien prévoir des orientations différentes, et notamment vers l'arrière, par exemple perpendiculaires.

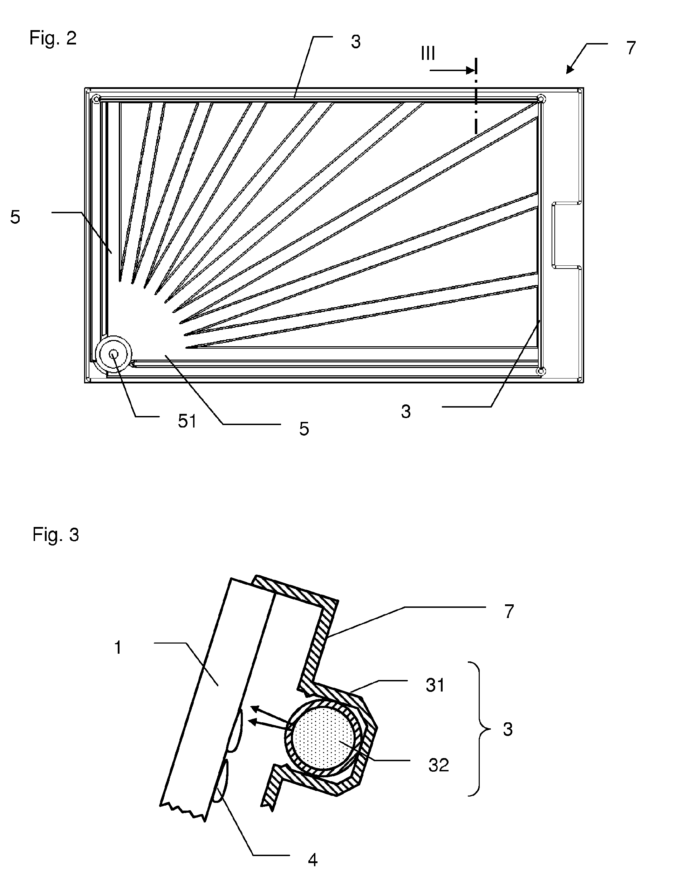

La figure 2 représente une vue de face d'une plaque arrière 7 selon l'invention. La plaque arrière 7 peut être obtenue par thermoformage, injection ou moulage, et comprend deux zones de distribution 3 chacune agencée le long d'un bord de la plaque arrière 7, qui comprend également deux zones de collecte 5, le long des bords opposés où se trouvent les zones de distribution 3. Ainsi, la même plaque arrière 7 représentée permet d'installer le panneau solaire en orientation portrait (vertical) ou paysage (horizontal).

Il est important de remarquer qu'il n'y a qu'un unique trou d'évacuation 51 commun aux deux zones de collecte, ce qui évite de boucher un trou non utilisé en fonction de l'orientation. On peut également remarquer que des nervures sont agencées en pentes sur la plaque arrière 7, de sorte qu'elles guident l'eau qui tomberait sur la plaque arrière 7 vers le trou d'évacuation 51.

La figure 3 représente une coupe partielle selon l'axe III de la figure 2, au niveau d'une zone de distribution 3. La plaque arrière 7 est formée avec une rainure ou goulotte 31, qui peut accueillir un tuyau 32 qui projette du liquide de refroidissement sur la face arrière des éléments photovoltaïques 1, pour former des gouttes de liquide de refroidissement 4.

La rainure ou goulotte 31 comprend des moyens de blocage pour bloquer et maintenir en place le tuyau 32. Deux picots sont représentés ici, mais on peut simplement envisager de prévoir la largeur de la goulotte 31 inférieure au diamètre du tuyau 32 pour le maintenir en position par serrage.

On peut envisager d'intégrer dans la plaque arrière 7 un chemin pour le joint d'étanchéité qui ferait le tour de la boîte de jonction électrique des éléments photovoltaïques, pour laisser la boîte de jonction à l'extérieur de la zone susceptible d'être baignée par le liquide de refroidissement.

On peut également envisager d'implanter dans les goulottes 31 des canaux en pente pour récupérer du liquide de refroidissement qui s'accumulerait dans une goulotte non utilisée en raison du positionnement portrait/paysage. Cela évite de prévoir un dispositif de récupération de liquide qui stagnerait.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Panneau solaire hybride comprenant :
- des éléments photovoltaïques (1) comportant une face avant et une face arrière,
- une plaque arrière (7) disposée en vis à vis de la face arrière desdits éléments photovoltaïques (1),
ladite plaque (7) comportant une zone de distribution (3) de gouttes de liquide de refroidissement (4), et une zone de collecte (5) de ces gouttes,
et **se caractérisant par le fait que** :
- les gouttes de liquide de refroidissement (4) sont isolées de l'air extérieur par la présence de ladite plaque arrière (7)
- la distribution des gouttes du liquide de refroidissement (4) se fait directement sur la face arrière des éléments photovoltaïques (1), de sorte à ce qu'elles glissent sur ladite face arrière des éléments photovoltaïques (1), les gouttes de liquide de refroidissement (4) descendent par gravité, protégées et isolées thermiquement par la plaque arrière (7) vers la zone de collecte (5),
le tout transformant le dos des éléments photovoltaïques en zone d'échange thermique.

2. Panneau solaire suivant la revendication précédente dans lequel la zone de distribution (3) est agencée pour définir des canaux de diffusion de gouttes de liquide de refroidissement espacés d'une distance comprise entre un et trois centimètres.

3. Panneau solaire suivant l'une des revendications précédentes dans lequel la plaque arrière (7), de type monobloc, constitue à la fois la zone de distribution(3), de collecte (5) et l'isolation.

4. Panneau solaire suivant l'une des revendications précédentes dans lequel le passage du liquide de refroidissement se fait sans pression et par simple gravité.

5. Panneau solaire suivant l'une des revendications précédentes dans lequel la plaque arrière, non métallique, est constituée par un matériau composite ou plastique, qui fait aussi office d'isolation.

6. Panneau solaire suivant l'une des revendications précédentes comportant un boîtier de jonction, dans lequel le boîtier de jonction est doté de dimensions minimales, de manière à disparaître hors de la surface des éléments photovoltaïque, pour se loger dans une partie technique du support des éléments photovoltaïques, comme le coin ou le profilé cadre.

7. Panneau solaire suivant l'une des revendications précédentes, dans lequel la plaque arrière (7) inclut un réseau hydraulique agencé pour mettre en circulation le liquide de refroidissement, et/ou présente des dimensions correspondant aux dimensions de l'ensemble des éléments photovoltaïques (1), de sorte à pouvoir se bloquer sur le panneau et se connecter à un système global de circulation de liquide de refroidissement.

8. Panneau solaire suivant l'une des revendications précédentes, dans lequel la plaque arrière (7) comprend des raidisseurs, tels que des nervures ou des inserts, parallèles aux bords de la plaque arrière (7), et/ou parallèles aux diagonales, c'est-à-dire avec une orientation de 45° par rapport aux bords de la plaque arrière (7).

9. Panneau solaire suivant la revendication précédente, dans lequel au moins un des raidisseurs est une goulotte qui loge un canal de passage du liquide de refroidissement.

10. Panneau solaire suivant l'une des revendications précédentes, dans lequel le panneau comprend des moyens d'étanchéité ente la plaque arrière (7) et les éléments photovoltaïques (1).

11. Panneau solaire suivant l'une des revendications précédentes, dans lequel la plaque arrière (7) présente une longueur et une largeur, et est agencée pour former au moins une zone de distribution (3) sur sa longueur et/ou au moins une zone de distribution (3) sur sa largeur

12. Panneau solaire suivant la revendication précédente, dans lequel il est prévu un unique trou d'évacuation de liquide de refroidissement, qui est agencé dans un coin.

13. Panneau solaire suivant l'une des revendications précédentes, dans lequel la zone de distribution (3) comprend au moins un conduit de distribution qui s'étend d'une extrémité amont depuis un bord latéral du panneau solaire vers une extrémité aval à un autre bord latéral, et le conduit est connecté à chaque extrémité à un coude de connexion qui traverse la plaque arrière.

14. Panneau solaire suivant la revendication précédente, dans lequel la plaque arrière (7) comprend des moyens de blocage dudit au moins un conduit de distribution, tels qu'une goulotte formée dans la structure de la plaque arrière et agencée pour pincer ledit au moins un conduit de distribution, et/ou un connecteur passe paroi traversant la paroi de la plaque arrière et connecté audit au moins un conduit de distribution.

15. Procédé de refroidissement d'un panneau solaire hybride,
le panneau solaire comprenant :
- des éléments photovoltaïques (1) avec une face avant et une face arrière,
- une plaque arrière (7) disposée en vis à vis de la face arrière desdits éléments photovoltaïques (1),
le procédé de refroidissement comprenant les étapes consistant à :
- fournir des gouttes de liquide de refroidissement sur la face arrière des éléments photovoltaïques (1), dans une zone de distribution (3) formée par la plaque arrière (7),
- faire glisser ces gouttes de liquide de refroidissement sur la face arrière par gravité,
- récupérer ces gouttes de liquide de refroidissement dans une zone de collecte (5) formée par la plaque arrière (7).
